(19) **Europäisches Patentamt**
**European Patent Office**
**Office européen des brevets**

(11) **EP 4 022 486 B1**

(12) **EUROPEAN PATENT SPECIFICATION**

(45) Date of publication and mention
of the grant of the patent:
**21.05.2025 Bulletin 2025/21**

(21) Application number: **19766407.1**

(22) Date of filing: **28.08.2019**

(51) International Patent Classification (IPC):
**G06F 30/17** *(2020.01)* **G06F 30/20** *(2020.01)*
**B33Y 50/00** *(2015.01)* **G06T 19/20** *(2011.01)*
**G06F 113/10** *(2020.01)*

(52) Cooperative Patent Classification (CPC):
**G06F 30/17; G06F 30/20; B33Y 50/00;**
G06F 2113/10

(86) International application number:
**PCT/US2019/048575**

(87) International publication number:
**WO 2021/040705 (04.03.2021 Gazette 2021/09)**

(54) **SYSTEMS AND METHOD FOR PROCESSING TOPOLOGY OPTIMIZED GEOMETRIES**

SYSTEME UND VERFAHREN ZUR VERARBEITUNG VON TOPOLOGIEOPTIMIERTEN GEOMETRIEN

SYSTÈMES ET PROCÉDÉ POUR TRAITER DES FORMES GÉOMÉTRIQUES À TOPOLOGIE OPTIMISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.07.2022 Bulletin 2022/27**

(73) Proprietor: **Siemens Industry Software Inc.**
**Plano, TX 75024 (US)**

(72) Inventors:
• **GAVRANOVIC, Stefan**
**85640 Putzbrunn (DE)**
• **MUSUVATHY, Suraj Ravi**
**Princeton Junction, New Jersey 08550 (US)**
• **HARTMANN, Dirk**
**85617 Aßling (DE)**
• **NANSON, Peter Philip Lonsdale**
**Cambridge CB1 3HX (GB)**
• **COLLINS, Richard Charles**
**Cambridge CB1 7DA (GB)**

• **DEDHIA, Hiren**
**Santa Ana, California 92705 (US)**

(74) Representative: **Siemens Patent Attorneys**
**Postfach 22 16 34**
**80506 München (DE)**

(56) References cited:
• **J. C. CUILLIÈRE ET AL: "Towards the Integration of Topology Optimization into the CAD Process", COMPUTER-AIDED DESIGN AND APPLICATIONS, vol. 11, no. 2, 4 March 2014 (2014-03-04), pages 120 - 140, XP055479928, ISSN: 1686-4360, DOI: 10.1080/ 16864360.2014.846067**
• **J. C. CUILLIÈRE ET AL: "Automatic mesh generation and transformation for topology optimization methods", COMPUTER AIDED DESIGN, vol. 45, no. 12, 3 August 2013 (2013-08-03), pages 1489 - 1506, XP028728416, ISSN: 0010-4485, DOI: 10.1016/ J.CAD.2013.07.004**

EP 4 022 486 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND

Computer systems can be used to create, use, and manage data for products and other items. Examples of computer systems include computer-aided design (CAD) systems (which may include computer-aided engineering (CAE) systems), computer-aided manufacturing (CAM) systems, visualization systems, product data management (PDM) systems, product lifecycle management (PLM) systems, and more. These systems may include components that facilitate the design and simulated testing of product structures and product manufacture.

J. C. CUILLIÈRE ET AL: "Towards the Integration of Topology Optimization into the CAD Process",COMPUTER-AIDED DESIGN AND APPLICATIONS, vol. 11, no. 2, (2014-03-04) is relevant prior art.

## BRIEF DESCRIPTION OF THE DRAWINGS

Certain examples are described in the following detailed description and in reference to the drawings.

Figure 1 shows an example of a computing system that supports processing of topology optimized geometries in accordance with the present disclosure.
Figure 2 shows an example of topology optimized geometries that a computing system may access and process.
Figure 3 shows an example of an enrichment operation by a geometry processing engine to conform a topology optimized geometry to an original geometry.
Figure 4 shows an example a restriction operation by a geometry processing engine to conform a topology optimized geometry to an original geometry.
Figure 5 shows an example of a conformed geometry generated through insertion of fixed regions of an original geometry into a topology optimized geometry.
Figure 6 shows an example of smoothing that a geometry processing engine may perform for non-fixed portions of a topology optimized geometry.
Figure 7 shows an example of logic that a system may implement to process topology optimized geometries according to the present disclosure.
Figure 8 shows an example of logic that a system may implement to support conversion of a topology optimized geometry into a CAD geometry.
Figure 9 shows an example of a computing system that supports processing of topology optimized geometries in accordance with the present disclosure.

## DETAILED DESCRIPTION

Additive manufacturing (sometimes referred to as 3-dimensional or 3D printing) may be performed through use of 3D printers that can construct objects on a layer-by-layer basis. With increasing capability and use of additive manufacturing technologies today, manufacture of arbitrary and complex product designs has become increasing possible. Within a given design space, previous manufacturing limitations can be overcome through additive manufacturing, and product designers now have increasing design freedoms that support optimization of manufactured objects. Moreover, additive manufacturing processes can enable the manufacturing of parts with unique physical properties through design or control of the part's geometric structure, including the design of micro-structures that form an internal geometry of the object design (e.g., lattices, internal geometric patterns, etc.).

With the increasing capability and prevalence of additive manufacturing technologies, topology optimization has become an increasingly popular design technique to generate product structures. Topology optimization may include technologies that modify material or structural layouts of an object to achieve a particular goal. Topology optimization may be used in aerospace, mechanical, bio-chemical, automotive, and many other fields to, for example, improve the performance of parts or reduce a required weight of raw materials.

While topology optimization technologies can produce part structures with increased design efficiencies, the output of topology optimization processes may require reconstruction into a geometric form suitable for 3D printing. Moreover, due to design space discretization requirements for finite element analyses (FEA) in topology optimizations, density maps or other topology optimized outputs may yield coarse, rigid, or non-smooth geometries. This may especially be the case as topology optimization discretization to high-resolution granularities may not be computationally feasible because topology optimization and FEA computations at such fine granularities may result in increased processing latencies or required computational resources that are not practical with current computing CAD, CAE, CAM, and other CAx systems.

The disclosure herein may provide systems, methods, devices, and logic for processing topology optimized geometries. In particular, the various topology optimized processing features may include smoothing of topology optimized geometries, conforming topology optimized geometries to preserve original geometry characteristics, and converting topology optimized geometries into CAD-editable models for subsequent design. Each of these various technologies are described in greater detail herein, and the disclosed processing technologies may include various technical features to increase the efficiency, feasibility, and capability of using topology optimization results to further design and manufacture 3D parts.

These and other features and technical benefits are described in greater detail herein.

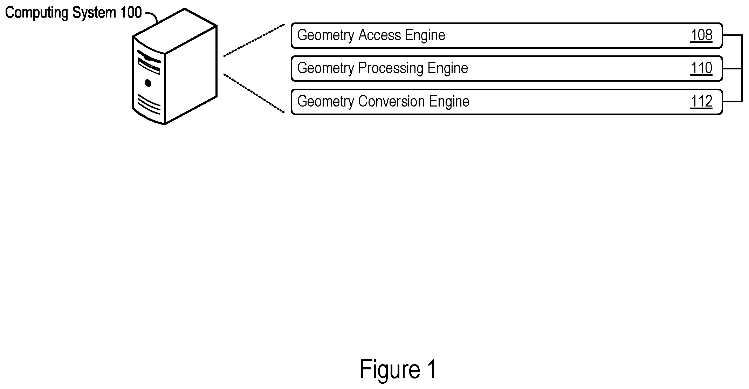

Figure 1 shows an example of a computing system 100 that supports processing of topology optimized geometries in accordance with the present disclosure. The computing system 100 may take the form of a single or multiple computing devices such as application servers, compute nodes, desktop or laptop computers, smart phones or other mobile devices, tablet devices, embedded controllers, and more. In some examples, the computing system 100 is part of or implements (at least in part) a CAD system, a CAM system, a CAE system, any other CAx system, or a 3D printing system. In that regard, the computing system 100 may support the design, simulation, or manufacture of topology optimized part designs.

As an example implementation to support any combination of the features described herein, the computing system 100 shown in Figure 1 includes an geometry access engine 108, a geometry processing engine 110, and a geometry conversion engine 112. The computing system 100 may implement the engines 108, 110, and 112 (including components thereof) in various ways, for example as hardware and programming. The programming for the engines 108, 110, and 112 may take the form of processor-executable instructions stored on a non-transitory machine-readable storage medium and the hardware for the engines 108, 110, and 112 may include a processor to execute those instructions. A processor may take the form of single processor or multi-processor systems, and in some examples, the computing system 100 implements multiple engines using the same computing system features or hardware components (e.g., a common processor or a common storage medium).

Note that the example implementation of the computing system 100 shown in Figure 1 includes the geometry access engine 108, the geometry processing engine 110, and the geometry conversion engine 112. In other implementations, the computing system 100 may include only a subset of the engines 108, 110, and 112.

In operation, geometry access engine 108 may access geometries associated with a topology optimization process. In particular, the geometry access engine 108 may access an original geometry that represents a design space upon which the topology optimization process applies to as well as a topology optimized geometry that represents an output of the topology optimization process performed for the original geometry. In operation, the geometry processing engine 110 may generate a final geometry from the topology optimized geometry, including by conforming the topology optimized geometry to the original geometry at portions of the topology optimized geometry that correspond to fixed regions of the original geometry as well as smoothing the topology optimized geometry at portions that correspond to non-fixed regions of the original geometry. In operation, the geometry conversion engine 112 may convert the final geometry into a CAD-editable topology, including by extracting a triangle mesh from the final geometry, converting the triangle mesh into subdivision surfaces, and initializing a control cage for the subdivision surfaces

In that regard, the geometry access engine 108, geometry processing engine 110, and geometry conversion engine 112 may support post-processing of topology optimized geometries. These and other topology optimized geometry processing features are described in greater detail next.

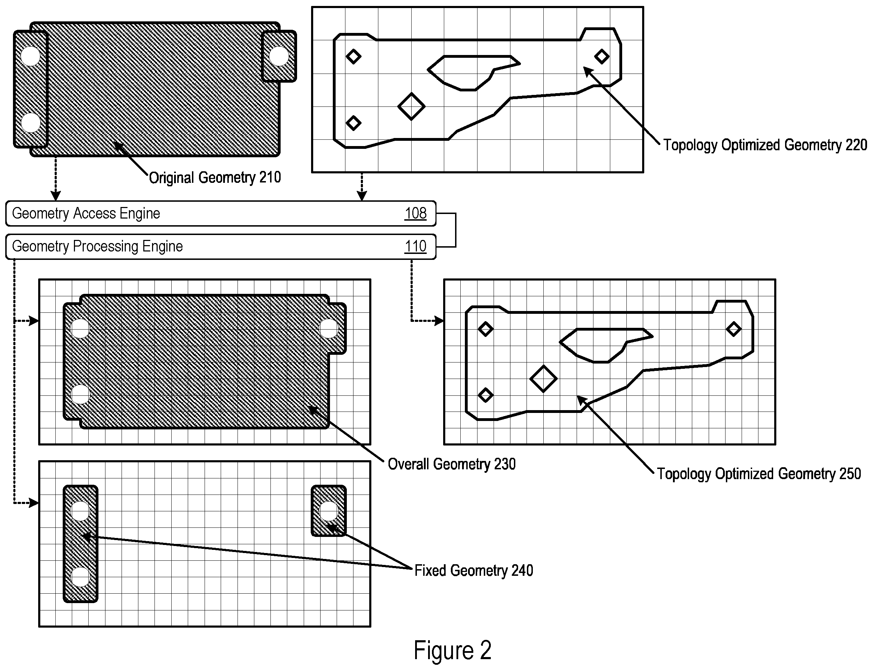

Figure 2 shows an example of topology optimized geometries that a computing system may access and process. In the particular example shown in Figure 2, a computing system is illustrated in the form of a geometry access engine 108 and a geometry processing engine 110. However, other system implementations are contemplated herein.

The geometry access engine 108 may access various geometries in support of post-processing topology optimization results. As seen in Figure 2, the geometry access engine 108 may access an original geometry 210 and a topology optimized geometry 220. Each of these geometries are described in turn.

The original geometry 210 may be any geometry that represents a 3D part or object. As examples, the original geometry 210 may be a CAD model designed using CAD-based shapes and design primitives (e.g., planes, curves, lines, cylinders, cubes, 3D faces, and other solid bodies and CAD design primitives). As such, the original geometry 210 may be comprised of smooth parametrized geometries, e.g., using non-uniform rational B-Splines (NURBS) or in other forms. In some instances, the original geometry 210 may be in a form referred to as a cut model.

As another characteristic, the original geometry 210 may represent a design space upon which a topology optimization process applies to (e.g., is performed upon). Such a design space may be user-identified as an input to a topology optimization process (for which the output is the topology optimized geometry 220). In some instances, the original geometry may include fixed regions designated to remain unchanged by the topology optimization process. As such, fixed regions may represent a portion of the original geometry 210 that is fixed in design (e.g., should not change). In some cases, such fixed regions may be referred to as "keep in" or "keep out" regions for density-based topology optimizations, and may thus specify design constraints that should be adhered to in a topology optimization process.

The topology optimized geometry 220 may represent an output of the topology optimization process performed for the original geometry 210. While some of the examples are described herein in the context of density-based topology optimizations (e.g., Solid Isotrophic Material with Penalization (SIMP)-based topology optimizations), any type of topology optimization is contemplated herein. Topology optimization results may be represented in the form of a density map, as one example. As another example, density-based topology optimization results may be converted to a level-set representation, which may refer to a scalar function $\phi$ that encodes or otherwise represents a given geometry. As a continuing example used herein, the topology optimized geometry 220 is described as geometry encoded with a zero level set, in which a boundary of a geometry is the zero value of the level set function $\phi$ and the interior of the geometry is represented by negative values of the level set function $\phi$. However, the topology optimized geometry processing features described herein may be consistently implemented for various other geometry representations as well.

As topology optimization may require discretization of a design space for FEA and other topology optimization computations, the topology optimized geometry 220 may likewise be represented or constructed from discretized data (e.g., a density map at a discretization granularity used for the topology optimization). To control computation latencies and required processing power, topology optimizations may be performed at a coarser discretization granularity than geometry resolutions typically used to additively manufacture objects. Consequently, reconstructing a faceted or parametric geometry for 3D printing directly from the topology optimized geometry 220 may result in a non-smooth and rough shape. This may be the case as the resolution of a topology optimization process (e.g., a discretization granularity of voxels for FEA of the original geometry 210) is coarser than the printing resolution of 3D printers, resulting in boxy or unrefined 3D printed parts.

The topology optimized geometry processing features described herein may provide post-topology optimization processing capabilities to support manufacture of topology optimized 3D parts with increased effectiveness. In some instances, such features may result in smoothed geometry representations that can be extracted into parametric representations and 3D printed to produce 3D parts with improved aesthetics or mechanical stability. In processing topology optimized geometries, the features described herein may increase the accuracy of 3D part designs by conforming fixed design regions to original geometry designs, smoothing topology optimization results at finer resolutions to improve part structures, converting topology optimization results into CAD-editable forms to support subsequent design adjustments, or any combination thereof.

In order to post-process topology optimization results, the geometry processing engine 110 may represent various geometries at a finer granularity (also referred to herein as a finer resolution) than the discretization resolution used to perform a topology optimization for a part design. As used herein, the "finer granularity" may refer to mesh or geometry resolution used to post-process topology optimized results that is finer or higher in resolution/granularity than that used by a topology optimization process to generate the topology optimization results. In the example shown in Figure 2, the geometry processing engine 110 represents the original geometry 210 and the topology optimized geometry 220 at a finer granularity than a discretization granularity used to generate the topology optimized geometry 220.

In some cases, the geometry processing engine 110 refines the resolution by a factor of 2, but the degree to which the geometry processing engine 110 enhances resolution may be configurable (e.g., 4x, 8x, 16x, etc.) and dependent upon computational latency requirement, available computing resources, etc. Resolution enhancement by the geometry processing engine 110 may be performed, for example, by equally subdividing voxels (or other discrete elements) of the topology optimized geometry 220 into the finer resolution. In Figure 2, the geometry processing engine 110 represents three geometries in a finer granularity, shown as the overall geometry 230, the fixed geometry 240, and the topology optimized geometry 250.

The overall geometry 230 and the fixed geometry 240 may be represented from the original geometry 210, e.g., by discretizing the original geometry 210 (or portions thereof) at the finer granularity and representing the discretized original geometry as level set representations (or any other geometric form). The overall geometry 230 may set boundary limits of the design space of the original geometry 210 upon which a topology optimization process applies to (e.g., an initial input geometry, with bounding boxes or other design spaces to optimize as well as fixed regions in the initial input geometry). The fixed geometry 240 may include a portion of the design space of the original geometry 210 that is designated not to change from the topology optimization process (e.g., the fixed regions of the original geometry 210). As subsequently described, the geometry processing engine 110 may use the overall geometry 230 and the fixed geometry 240 to conform topology optimized geometries to correspond to fixed regions of the original geometry 210.

The geometry processing engine 110 may represent the topology optimized geometry 250 by discretizing the topology optimized geometry 220 at the finer granularity (e.g., enhancing the mesh resolution by a factor of 2, 4, 8, 16, etc.). In that regard, the geometry (e.g., represented shape) of the topology optimized geometry 250 may be identical to that of the topology optimized geometry 220, but discretized at a finer granularity to support conforming and smoothing operations as described herein.

In some implementations (and as a continuing example herein), the geometry processing engine 110 may represent the overall geometry 230, fixed geometry 240, and the topology optimized geometry 250 as level-set representations, which may be referred to herein respectively as $\phi_{OG}$ (for the overall geometry 230), $\phi_{FG}$ (for the fixed geometry 240), and $\phi_{TO}$ (for the topology optimized geometry 250). Moreover, some the examples described herein depict level set representations on a full rectangular grid, but the geometry processing engine 110 may support level set representations according to narrow band methods to provide increased processing efficiency.

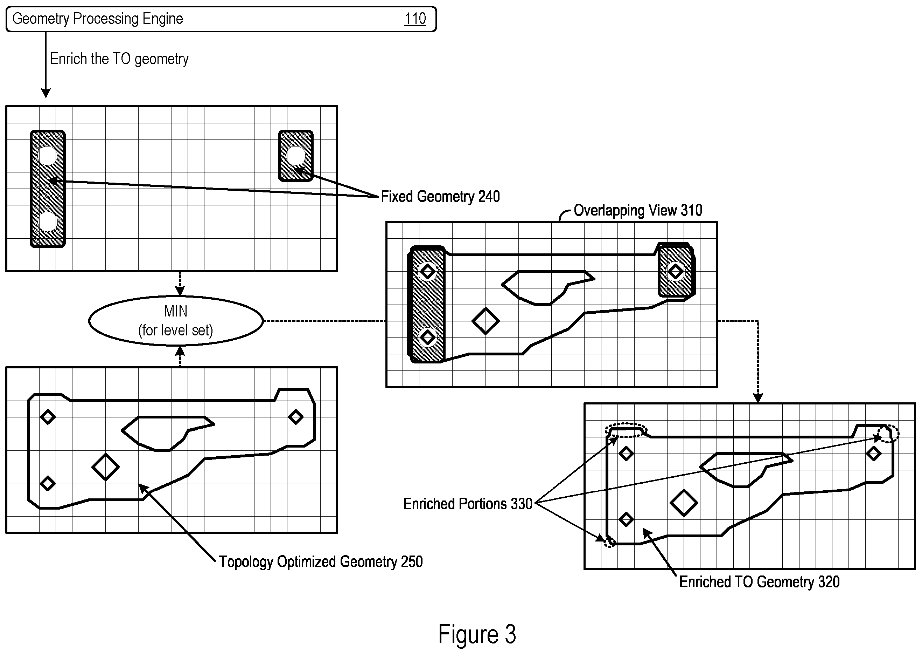

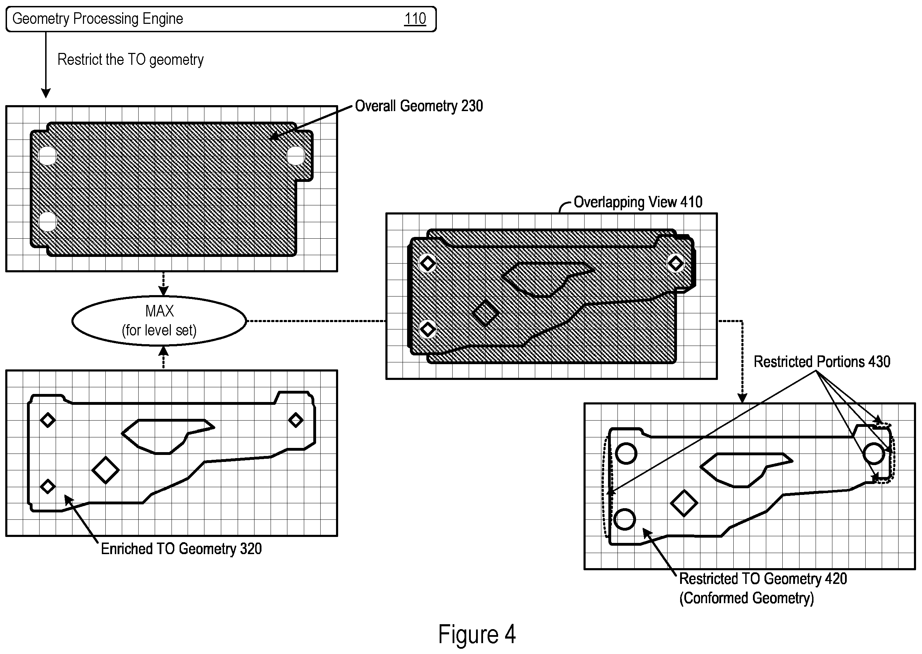

To conform portions of the topology optimized geometry 250 to the original geometry 210, the geometry processing engine 110 may enrich the topology optimized geometry 250 with the fixed geometry 240, restrict the topology optimized geometry 250 with the overall geometry 240, or a combination of both. Examples of such features are described next in connection with Figures 3 and 4.

Figure 3 shows an example of an enrichment operation by the geometry processing engine 110 to conform the topology optimized geometry to an original geometry. In particular, the geometry processing engine 110 may enrich the topology optimized geometry 250 (represented at the finer granularity) with the fixed geometry 240 (extracted from the original geometry 210 and also represented at the finer granularity).

In performing the enrichment operation, the geometry processing engine 110 may add, into the topology optimized geometry 250, any fixed portions of the original geometry 210 (as represented by the fixed geometry 240) that were removed by a topology optimization process used to generate the topology optimized geometry 220 (and now represented as the topology optimized geometry 250). Such enriching may be performed by overlaying the fixed geometry 240 on the topology optimized geometry 250 (or vice versa) and ensuring any "keep-in", solid, or interior portions of the fixed geometry 240 are likewise represented as solid and interior portions of the topology optimized geometry 250.

In Figure 3, an example overlay is illustrated through the overlapping view 310, in which can be seen certain portions of the fixed geometry 240 are not included as solid or interior to the geometry of the topology optimized geometry 250. As such, the geometry processing engine 110 may modify the topology optimized geometry 250 to include these missing portions of the fixed geometry 240, thereby enriching the topology optimized geometry 250. Put another way, the geometry processing engine 110 may enrich the topology optimized geometry 250 to include portions of the fixed geometry 240 that are missing in the topology optimized geometry 250 due to removal by a topology optimization process, doing so at a finer granularity than the discretization granularity used for the topology optimization process. An example output of an enrichment operation by the geometry processing engine 110 is shown in Figure 3 as the enriched TO geometry 320, and portions at which solid geometries are reintroduced by the geometry processing engine 110 are shown as the enriched portions 330.

In examples in which the fixed geometry 240 and topology optimized geometry 250 are represented as zero level sets with interior geometries represented by negative values of a level set function $\phi$, the geometry processing engine 110 may perform the enrichment operation as a minimum function. As such, the geometry processing engine 110 may generate the enriched TO geometry 320 (with a level set function of $\phi_{eTO}$) as $\phi_{eTO} = \min(\phi_{TO}, \phi_{FG})$.

Accordingly, the geometry processing engine 110 may enrich a topology optimized geometry to include fixed portions of an original geometry that were removed from a design by topology optimization.

Figure 4 shows an example of a restriction operation by the geometry processing engine 110 to conform a topology optimized geometry to an original geometry. In particular, the geometry processing engine 110 may restrict the enriched TO geometry 320 (represented at the finer granularity) with the overall geometry 230 (as extracted from the original geometry 210 and also represented at the finer granularity).

In performing the restriction operation, the geometry processing engine 110 may remove, from a topology optimized geometry (such as the enriched TO geometry 320) any additional portions, added by the topology optimization process used to generate the topology optimized geometry 220, that extend beyond a boundary of the design space of the original geometry 210. Such restricting may be performed by overlaying the overall geometry 230 on the enriched TO geometry 320 (or vice versa) and ensuring that (i) any "keep-out" portions of the fixed geometry 240 are likewise represented as empty or exterior shape portions of a topology optimized geometry (e.g., the enriched TO geometry 250) as well as (ii) solid portions of the topology optimized geometry (e.g., the enriched TO geometry 320) do not extend beyond the external boundaries of the overall geometry 230.

In Figure 4, an example overlay is illustrated through the overlapping view 410, in which can be seen certain portions of the enriched TO geometry 320 extend beyond a boundary of the overall geometry 230. As such, the geometry processing engine 110 may modify the enriched TO geometry 320 to remove these additional portions of the enriched TO geometry 320 that extend beyond an allowable design space, thereby restricting the enriched TO geometry 320. Additionally or alternatively, the geometry processing engine 110 may perform the restriction operation to remove portions of the enriched TO geometry 320 that correspond to fixed regions of the original geometry 210 configured to be non-solid or empty, thereby ensuring that fixed "keep-out" regions of the original geometry 210 are adhered to in a topology optimized design.

As described herein, the geometry processing engine 110 may restrict a topology optimized geometry (e.g., the enriched TO geometry 320) to exclude portions of the topology optimized geometry that extend beyond the overall geometry 230, exclude portions of the topology optimized geometry that are designated as fixed empty regions in the original geometry 210, or a combination of both. The geometry processing engine 110 may do so at the finer granularity. An example output of a restriction operation by the geometry processing engine 110 is shown in Figure 4 as the restricted TO geometry 420, and some examples of restricted portions 430 at which solid geometries extending beyond a design space boundary are removed are shown as the restricted portions 430.

In examples in which the fixed geometry 240 and enriched TO geometry 320 are represented as zero level sets with interior geometries represented by negative values of a level set function $\phi$, the geometry processing engine 110 may perform the restriction operation as a maximum function. As such, the geometry processing engine 110 may generate the restricted TO geometry 420 (with a level set function of $\phi_{rTO}$) as $\phi_{rTO} = \max(\phi_{eTO}, \phi_{OG})$.

Note that in the example shown in Figure 4, the geometry processing engine 110 performs a restriction operation on the enriched TO geometry 320, as doing so may preserve the results of an enrichment operation previously performed by the geometry processing engine 110. Consequently, the restricted TO geometry 420 shown in Figure 4 also includes enriched portions 330 added into a topology optimized geometry to conform to fixed regions of an original geometry.

While the ordering of Figures 3 and 4 provide an illustrative example of performing an enrichment operation prior to performing a restriction operation, alternative orderings are possible by the geometry processing engine 110. For example, the geometry processing engine 110 may perform a restriction operation between the overall geometry 230 and the topology optimized geometry 250 to generate a given restricted TO geometry, and then subsequently perform the enrichment operation between the given restricted TO geometry and the fixed geometry 240.

In that regard, the geometry processing engine 110 may enrich and restrict a topology optimized geometry (in various orders) to conform the topology optimized geometry to fixed regions an original geometry. The restricted TO geometry 420 shown in Figure 4 may represented a conformed geometry in that the restricted TO geometry 420 represents the fixed geometry 420 of the original geometry 210 and does not extend beyond the overall geometry 230 of the original geometry 210. Understood in a different way, a conformed geometry may be generated by the geometry processing engine 110 to represent fixed regions of an original design at finer granularity than a discretization granularity of a topology optimization process.

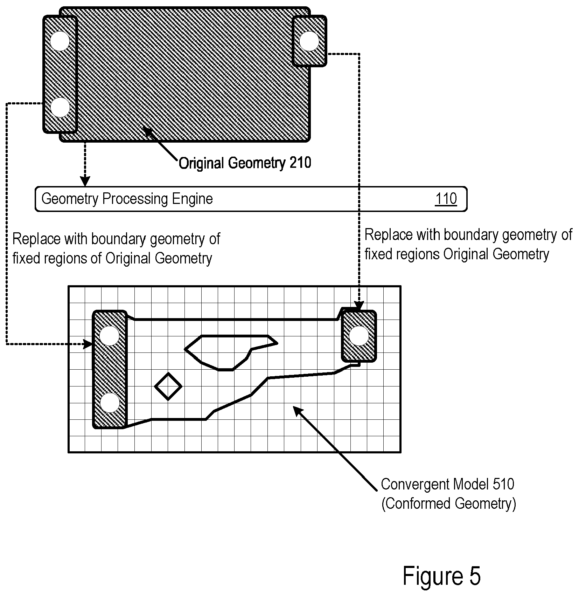

In Figures 3 and 4, the geometry processing engine 110 may conform a topology optimized geometry to an original geometry via geometric operations performed for a given representation of the geometries (e.g., zero level sets at a finer granularity). In some implementations, the geometry processing engine 110 may conform topology optimized geometries to original geometries by directly inserting portions (e.g., fixed regions) of an original geometry into the topology optimized geometry, as discussed in greater detail next in connection with Figure 5.

Figure 5 shows an example of a conformed geometry generated through insertion of fixed regions of an original geometry into a topology optimized geometry. The geometry processing engine 110 may generate a conformed geometry via the features described in Figure 5, for example as an alternative to the geometry conforming features as described for Figures 3 and 4.

In particular, the geometry processing engine 110 may identify portions of a topology optimized geometry that correspond to correlated portions of an original geometry 210 and replace such portions of the topology optimized geometry directly with the geometry of the original geometry. Using the original geometry 210 described in Figure 2 as an illustrative example, the geometry processing engine 110 may identify such correlated portions as fixed regions of the original geometry 210. As such, the geometry processing engine 110 may replace the portions of a topology optimized geometry (e.g., the topology optimized geometry 220 or 250) that correspond to fixed regions of the original geometry 210 with the original geometry at the fixed regions.

That is, the geometry processing engine 110 may reconstruct portions of the original geometry 210 directly into a topology optimized geometry. Additionally or alternatively, the geometry processing engine 110 may input, align, or otherwise insert the boundary geometry of fixed regions of the original geometry 210 into topology optimized geometry, which may directly preserve the original design intent of a part design. In doing so, the geometry processing engine 110 may restrict or enrich portions of the topology optimized geometry directly with the boundary geometry itself of the original geometry 210 (e.g., corresponding portions thereof to form the exterior boundary of the topology optimized geometry). Explained in yet another way, the geometry processing engine 110 may adapt, insert, or configure geometry boundaries of the topology optimized geometry directly with geometry boundaries (or portions thereof) of fixed regions of the original geometry 210 (but need not enforce or insert internal boundaries of fixed regions that do not affect or form a geometry boundary of the topology optimized geometry). By doing so, the geometry processing engine 110 may support tighter integration of topology optimized geometries with the original geometry 210 from which a topology optimized geometry is generated from.

The reconstructed portions may be inserted into a topology optimized geometry as boundary geometries, cut models, CAD design primitives, or in any other CAD-editable form. In that regard, a conformed geometry generated in such a way by the geometry processing engine 110 may include multiple types of geometric representations in the same design. As an example shown in Figure 5, the geometry processing engine 110 may generate a convergent model 510 in which fixed regions of the original geometry 220 are represented as computer-aided design (CAD) geometry and non-fixed regions of a topology optimized geometry are represented as facets (e.g., at a finer granularity). As such, the convergent model 510 may be in the form of a single object model, with a combination of facet and classic geometry.

As noted herein, to generate the convergent model 510, the geometry processing engine 110 may identify portions of a topology optimized geometry 250 that correspond to the fixed regions, and replace those identified directly with the fixed regions of the original geometry 210 (e.g., directly with CAD design primitives). Through insertion of portions of an original geometry into a topology optimized geometry, such features may preserve design intent and associativity and provide for downstream processing of such regions (e.g., for CAM simulations) with increased efficiency.

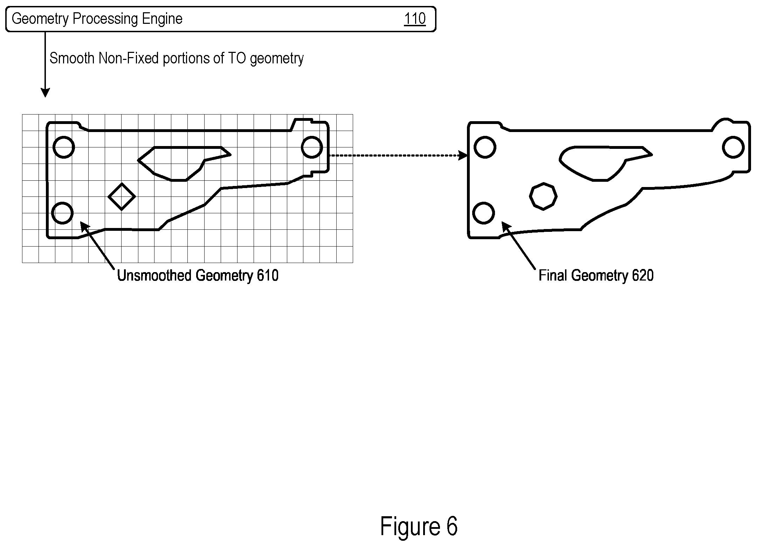

In Figure 5, the convergent model 510 generated by the geometry processing engine 110 may be a conformed geometry in that a topology optimized geometry has been processed to conform (in this case directly) to fixed regions of the original geometry 210. The geometry processing engine 110 may conform a topology optimized geometry through insertion of original geometry portions before or after smoothing other portions of the topology optimized geometry. In some implementations, the geometry processing engine 110 conforms a topology optimized geometry (e.g., according to any of the features described in connection with Figures 3-5) prior to smoothing non-fixed portions of the topology optimized geometry. Doing so may increase efficiency by reducing the portion of a topology optimized geometry required to be processed to smooth the geometry. Smoothing is described next in connection with Figure 6.

Figure 6 shows an example of smoothing that the geometry processing engine 110 may perform for non-fixed portions of a topology optimized geometry. In Figure 6, the geometry processing engine 110 performs a smoothing operation for an unsmoothed geometry 610, which may be a conformed geometry such as the restricted TO geometry 420 described in Figure 4 or the convergent model 510 described in Figure 5.

The geometry processing engine 110 may smooth the unsmoothed geometry 610 through geometric flows. For instance, the geometry processing engine 110 may solve the following evolution equation, described using a conformed topology optimized geometry level set function $\phi_{cTO}$ as an example:

$$\frac{\partial}{\partial t}\,\phi_{cTO} + V|\phi_{cTO}| = 0$$

In this example, the geometry processing engine 110 may set V equal to zero (0) at fixed regions of the unsmoothed geometry 610 to ensure the fixed (e.g., conformed) regions of the unsmoothed geometry 610 do not change from the smoothing, thereby preserving the fixed regions of the original geometry 220 conformed into the unsmoothed geometry 610. In the remaining portions of the domain, e.g., the non-fixed portions of the unsmoothed geometry 610, the geometry processing engine 110 may smooth the curves via geometry flows, such as mean curvature flow or Willmore Flow as two examples.

By applying such smoothing processes, the geometry processing engine 110 may generate the final geometry 620. Since non-fixed portions of the unsmoothed geometry 610 may be represented at finer granularity than a discretization granularity applied for topology optimization, the smoothing operations may result in increased smoothness of curves in the final geometry 620 as compared to the topology optimized geometry 220.

From the final geometry, the geometry processing engine 110 may extract a tessellated or triangular-faceted geometry, e.g., via Marching Cubes or dual contouring, which may then be provided to a 3D printing system for additive manufacture. In some implementations, the geometry processing may further conform a tessellated or triangular-faceted geometry extracted from the final geometry 620. As one example, the geometry processing engine 110 may perform a Boolean operation between a mesh representation of the final geometry 620 and the original geometry 220 to remove distortions to the final geometry 520 that extend beyond boundaries of the original geometry 220. As another example, the geometry processing engine 110 may perform triangle smoothing on an extracted representation to smooth a design prior to additive manufacture.

In some implementations, further processing may be performed on the final geometry 620 or a faceted geometry extracted from the final geometry 620. Such processing may include conversion into a parametric geometry to support CAD editing which may be performed by a geometry conversion engine 112 as described in greater detail subsequently herein.

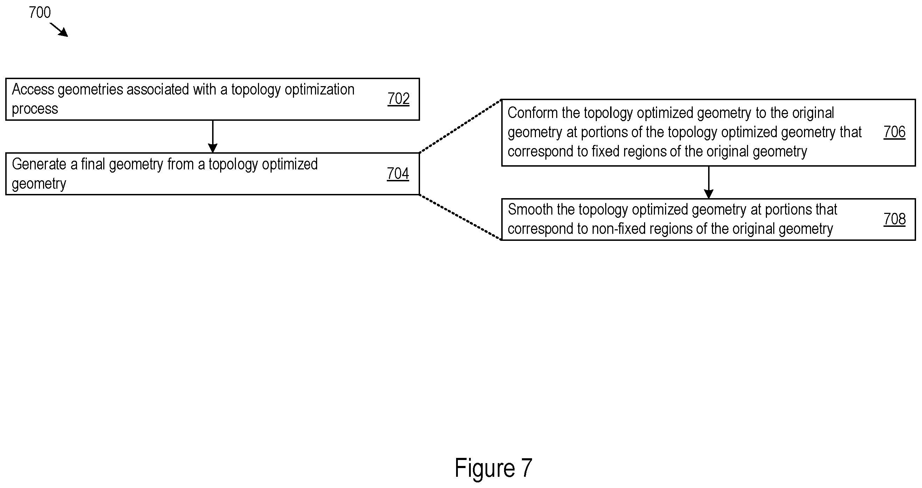

Figure 7 shows an example of logic that a system may implement to process topology optimized geometries according to the present disclosure. For example, the computing system 100 may implement the logic 700 as hardware, executable instructions stored on a machine-readable medium, or as a combination of both. The computing system 100 may implement the logic 700 via the geometry access engine 108 and the geometry processing engine 110, through which the computing system 100 may perform or execute the logic 700 as a method to post-process topology optimized geometries. The following description of the logic 700 is provided using the geometry access engine 108 and the geometry processing engine 110 as examples. However, various other implementation options by systems are possible.

In implementing the logic 700, the geometry access engine 108 may access geometries associated with a topology optimization process (702). Accessed geometries may include an original geometry that represents a design space upon which the topology optimization process applies to and a topology optimized geometry that represents an output of the topology optimization process performed for the original geometry. In implementing the logic 700, the geometry processing engine 110 may generate a final geometry from the topology optimized geometry (704), and generation of the final geometry may include performing conforming and smoothing operations on various portions of the topology optimized geometry.

For instance, the geometry processing engine 110 may conform the topology optimized geometry to the original geometry at portions of the topology optimized geometry that correspond to fixed regions of the original geometry (706). In doing so, the geometry processing engine 110 may generate a conformed geometry, whether by enrichment and restriction operations as described herein or by direct insertion of fixed regions of the original geometry into the topology optimized geometry, as also described herein. The geometry processing engine 110 may smooth topology optimized geometry at portions that correspond to non-fixed regions of the original geometry (708), e.g., by smoothing a conformed geometry via geometric flows.

The logic 700 shown in Figure 7 provides an illustrative example by which a computing system 100 may support processing of topology optimized geometries. Additional or alternative steps in the logic 700 are contemplated herein, including according to any features described herein for the geometry access engine 108, geometry processing engine 110, geometry conversion engine 112, or any combinations thereof.

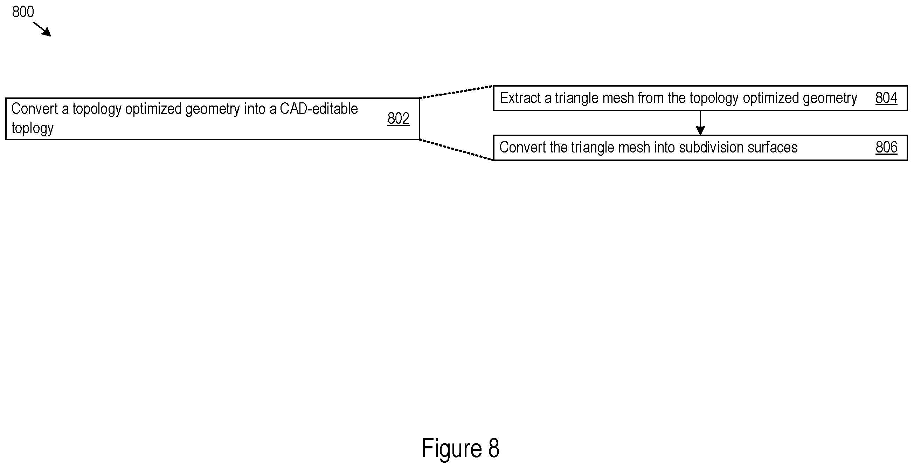

Figure 8 shows an example of logic 800 that a system may implement to support conversion of a topology optimized geometry into a CAD geometry. For example, the computing system 100 may implement the logic 800 as hardware, executable instructions stored on a machine-readable medium, or as a combination of both. The computing system 100 may implement the logic 700 via the geometry conversion engine 112, through which the computing system 100 may perform or execute the logic 700 as a method to post-process topology optimized geometries to convert the geometries into parametric or CAD-editable forms. The following description of the logic 800 is provided using the geometry conversion engine 112 as an example. However, various other implementation options by systems are possible.

In implementing the logic 800 and in operation, the geometry conversion engine 112 may convert a topology optimized geometry into a CAD-editable geometry (802). For instance, the geometry conversion engine 112 may convert the final geometry 620 described in Figure 6, which maybe conformed to an original geometry and smoothed to support subsequent additive manufacture. The final geometry 620 (another other topology optimized geometries described herein) may be discrete models, and the geometry conversion engine 112 may support transformation of such discrete models into CAD models, which may support further design and edits via a CAD system or application.

To convert a topology optimized geometry, the geometry conversion engine 112 may extract a triangle mesh from the topology optimized geometry (804). Isosurface extraction or other triangular meshing techniques may be used, e.g., to convert density maps generated by topology optimization processes into a triangular mesh. For geometries represented as level set functions (e.g., as described herein), the geometry conversion engine 112 may apply any number or tessellation or triangularization processes. In some instances, the geometry conversion engine 112 may further smooth the surface and remove jagged edges or other noisy artifacts as well, e.g., via standard surface mesh processing techniques.

The geometry conversion engine 112 may convert the triangle mesh into subdivision surfaces (806), doing so in various ways. In some examples, the geometry conversion engine 112 may decimate or otherwise simplify the triangle mesh using edge collapse operations. Then, the geometry conversion engine 112 may convert the decimated triangle mesh into a quadrilateral mesh, the quadrilaterals in the quadrilateral mesh may form a control cage through which subdivision surfaces can be generated via a subdivision process. As such, the geometry processing engine 110 may initialize a control cage with the quadrilateral mesh. As another example, the geometry conversion engine 112 may convert the triangle mesh into a quadrilateral mesh and then coarsen the quadrilateral mesh, in which the coarsened quadrilateral mesh may form the subdivision surfaces through the subdivision process. In this example, the geometry processing engine 110 may initialize a control cage from the coarsened quadrilateral mesh. Subdivision surfaces may be form from initialized control cages. Through subdivision processes of the control cage, a limit surface in a geometric shape that matches the topology optimized geometry may be formed to support editing via CAD processes.

In some instances, the geometry conversion engine 112 may initialize a control cage for the subdivision surfaces, doing so from the quadrilateral mesh formed from the triangle mesh. A control cage may be any CAD functionality that surrounds CAD faces that support manipulate underlying limit surfaces (e.g., faces formed by subdivision surfaces and the subdivision process). Control cages may be supported by various CAD systems, and the subdivision surfaces (e.g., limit surfaces) converted from the topology optimized geometry may provide references or anchors for the control cage, allowing subsequent CAD-based editing and modifications to a topology optimized geometry.

In some instances, the geometry conversion engine 112 may further adapt parameters of the control cage, e.g., by performing surface fitting to fit a triangular surface of the subdivision surfaces, adjusting weights of cage edges to create creases in the control cage, or combinations of both.

The logic 800 shown in Figure 8 provides an illustrative example by which a computing system 100 may support converting of topology optimized geometries into CAD-editable forms. Additional or alternative steps in the logic 800 are contemplated herein, including according to any features described herein for the geometry access engine 108, geometry processing engine 110, geometry conversion engine 112, or any combinations thereof.

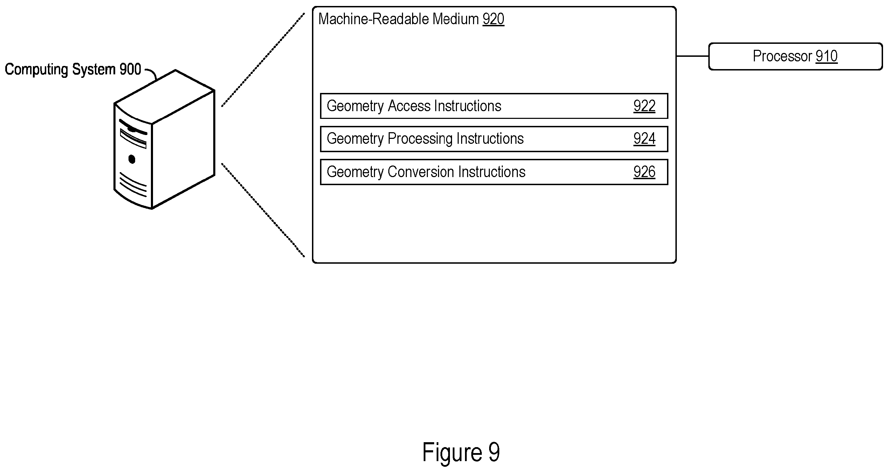

Figure 9 shows an example of a computing system 900 that supports processing of topology optimized geometries in accordance with the present disclosure. The computing system 900 may include a processor 910, which may take the form of a single or multiple processors. The processor(s) 910 may include a central processing unit (CPU), microprocessor, or any hardware device suitable for executing instructions stored on a machine-readable medium. The system 900 may include a machine-readable medium 920. The machine-readable medium 920 may take the form of any non-transitory electronic, magnetic, optical, or other physical storage device that stores executable instructions, such as the geometry access instructions 922, the geometry processing instructions 924, and the geometry conversion instructions 926 shown in Figure 9. As such, the machine-readable medium 920 may be, for example, Random Access Memory (RAM) such as a dynamic RAM (DRAM), flash memory, spin-transfer torque memory, an Electrically-Erasable Programmable Read-Only Memory (EEPROM), a storage drive, an optical disk, and the like.

The computing system 900 may execute instructions stored on the machine-readable medium 920 through the processor 910. Executing the instructions (e.g., the geometry access instructions 922, the geometry processing instructions 924, and/or the geometry conversion instructions 926) may cause the computing system 900 to perform any of the features described herein, including according to any of the features with respect to the geometry access engine 108, the geometry processing engine 110, the geometry conversion engine 112, or any combinations thereof.

For example, execution of the geometry access instructions 922 by the processor 910 may cause the computing system 900 to access geometries associated with a topology optimization process. The accessed geometries may include an original geometry that represents a design space upon which the topology optimization process applies to and a topology optimized geometry that represents an output of the topology optimization process performed for the original geometry.

Execution of the geometry processing instructions 924 by the processor 910 may cause the computing system 900 to generate a final geometry from the topology optimized geometry, including by conforming the topology optimized geometry to the original geometry at portions of the topology optimized geometry that correspond to fixed regions of the original geometry as well as smoothing the topology optimized geometry at portions that correspond to non-fixed regions of the original geometry.

Execution of the geometry conversion instructions 926 by the processor 910 may cause the computing system 900 to convert the final geometry into a CAD-editable topology, including by extracting a triangle mesh from the final geometry, converting the triangle mesh into subdivision surfaces, and initializing a control cage for the subdivision surfaces.

Any additional or alternative features as described herein may be implemented via the geometry access instructions 922, geometry processing instructions 924, geometry conversion instructions 926, or any combinations thereof.

The systems, methods, devices, and logic described above, including the geometry access engine 108, the geometry processing engine 110, and the geometry conversion engine 112, may be implemented in many different ways in many different combinations of hardware, logic, circuitry, and executable instructions stored on a machine-readable medium. For example, the geometry access engine 108, the geometry processing engine 110, the geometry conversion engine 112, or combinations thereof, may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. A product, such as a computer program product, may include a storage medium and machine-readable instructions stored on the medium, which when executed in an endpoint, computer system, or other device, cause the device to perform operations according to any of the description above, including according to any features of the geometry access engine 108, the geometry processing engine 110, the geometry conversion engine 112, or combinations thereof.

The processing capability of the systems, devices, and engines described herein, including the geometry access engine 108, the geometry processing engine 110, and the geometry conversion engine 112, may be distributed among multiple system components, such as among multiple processors and memories, optionally including multiple distributed processing systems or cloud/network elements. Parameters, databases, and other data structures may be separately stored and managed, may be incorporated into a single memory or database, may be logically and physically organized in many different ways, and may be implemented in many ways, including data structures such as linked lists, hash tables, or implicit storage mechanisms. Programs may be parts (e.g., subroutines) of a single program, separate programs, distributed across several memories and processors, or implemented in many different ways, such as in a library (e.g., a shared library).

While various examples have been described above, many more implementations are possible.

**Claims**

1. A method for improving a manufacture of topology optimized 3D parts, the method comprising:
by a computing system (100, 900):

accessing (702) geometries associated with a topology optimization process, the geometries comprising:

an original geometry (210) that represents a design space upon which the topology optimization process applies to, wherein the original geometry (210) also represents the 3D part, and wherein the original geometry (210) comprises fixed regions designated to remain unchanged by the topology optimization process; and
a topology optimized geometry (220) that represents an output of the topology optimization process performed for the original geometry (210); and

generating (704) a final geometry (620) from the topology optimized geometry (220) by:

conforming (706) the topology optimized geometry (220) to the original geometry (210) at portions of the topology optimized geometry (220) that correspond to said fixed regions of the original geometry (210); and
smoothing (708) the topology optimized geometry (220) at portions that correspond to non-fixed regions of the original geometry (210).

2. The method of claim 1, wherein conforming the topology optimized geometry (220) to the original geometry (210) comprises:
replacing the portions of the topology optimized geometry (220) that correspond to fixed regions of the original geometry (210) with the original geometry (210) at the fixed regions.

3. The method of claim 2, comprising generating the final geometry (620) as a convergent model (510), wherein the fixed regions of the original geometry (210) in the final geometry (620) are represented as computer-aided design (CAD) geometry and the smoothed portions of the topology optimized geometry (220) are represented as facets.

4. The method of claim 1, wherein smoothing the topology optimized geometry (220) comprises:

representing the topology optimized geometry (220) at a finer granularity than a discretization granularity used for the topology optimization; and
smoothing the topology optimized geometry (220) at the finer granularity.

5. The method of claim 1, wherein the original geometry (210) comprises:

an overall geometry (230) that sets boundary limits of the design space upon which the topology optimization process applies to; and
a fixed geometry (240) that comprises a portion of the design space that is designated not to change; and

wherein conforming the topology optimized geometry (220) to the original geometry (210) at portions of the topology optimized geometry (220) that correspond to fixed regions of the original geometry (210) comprises:

representing the overall geometry (230), the fixed geometry (240), and the topology optimized geometry (220) at a finer granularity than a discretization granularity used for the topology optimization;
enriching, at the finer granularity, the topology optimized geometry (220) to include portions of the fixed geometry (240) that are missing in the topology optimized geometry (220) due to removal by the topology optimization process; and
restricting, at the finer granularity, the topology optimized geometry (220) to exclude portions of the topology optimized geometry (220) that extend beyond the overall geometry (230).

6. The method of claim 1, wherein the final geometry (620) comprises a level-set geometry representation, and further comprising:

extracting a mesh representation of the final geometry (620) from the level-set geometry representation;
performing a Boolean operation between the mesh representation of the final geometry (620) and the original geometry (210) to remove a distortion to the final geometry that extends beyond the original geometry (210).

7. The method of claim 6, further comprising, in addition to smoothing the topology optimized geometry (220), smoothing the mesh representation of the final geometry (620).

8. The method of claim 1, further comprising converting (802) the final geometry into a computer-aided design (CAD)-editable topology by:

extracting (804) a triangle mesh from the final geometry; and
converting (806) the triangle mesh into subdivision surfaces.

**9.** The method of claim 8, wherein converting the triangle mesh into the subdivision surfaces comprises:

decimating the triangle mesh using edge collapse operations;
converting the decimated triangle mesh into a quadrilateral mesh; and
initializing a control cage from the quadrilateral mesh.

**10.** The method of claim 8, wherein converting the triangle mesh into the subdivision surfaces comprises:

converting the triangle mesh into a quadrilateral mesh;
coarsening the quadrilateral mesh; and
initializing a control cage from the coarsened quadrilateral mesh.

**11.** The method of claim 8, further comprising adapting parameters of the control cage by performing surface fitting to fit a triangular surface of the subdivision surfaces, adjusting weights of cage edges to create creases in the control cage, or a combination of both.

**12.** A system (100) for improving a manufacture of topology optimized 3D parts, said system (100) comprising:

a geometry access engine (108) configured to access geometries associated with a topology optimization process, the geometries comprising:

an original geometry (210) that represents a design space upon which the topology optimization process applies to, wherein the original geometry (210) also represents the 3D part, and wherein the original geometry (210) comprises fixed regions designated to remain unchanged by the topology optimization process; and
a topology optimized geometry (220) that represents an output of the topology optimization process performed for the original geometry (210); and

a geometry processing engine (110) configured to generate a final geometry from the topology optimized geometry (220) by:

conforming the topology optimized geometry (220) to the original geometry (210) at portions of the topology optimized geometry (220) that correspond to said fixed regions of the original geometry (210); and
smoothing the topology optimized geometry (220) at portions that correspond to non-fixed regions of the original geometry (210).

**13.** The system of claim 12, wherein the geometry access engine (108), the geometry processing engine (110), or a combination of both, are further configured to perform a method according to any of claims 2-7.

**14.** The system of claim 12, further comprising a geometry conversion engine (112) configured to perform a method according to any of claims 8-11.

**15.** A non-transitory machine-readable medium (920) comprising instructions (922, 924, 926) that, when executed by a processor (910), cause a computing system (900) to perform a method according to any of claims 1-11.

**Patentansprüche**

**1.** Verfahren zum Verbessern einer Herstellung von topologieoptimierten 3D-Teilen, wobei das Verfahren Folgendes umfasst:
durch ein Rechensystem (100, 900):

Zugreifen (702) auf Geometrien, die einem Topologie-Optimierungsprozess zugeordnet sind, wobei die Geometrien Folgendes umfassen:

eine Originalgeometrie (210), die einen Entwurfsraum darstellt, auf den der Topologie-Optimierungsprozess Anwendung findet, wobei die Originalgeometrie (210) zudem das 3D-Teil darstellt und wobei die Originalgeometrie (210) feste Bereiche umfasst, die ausgestaltet sind, um durch den Topologie-Optimierungsprozess unverändert zu bleiben; und
eine topologieoptimierte Geometrie (220), die eine Ausgabe des Topologie-Optimierungsprozesses darstellt, der für die Originalgeometrie (210) durchgeführt wird; und

Erzeugen (704) einer Endgeometrie (620) aus der topologieoptimierten Geometrie (220) durch:

Anpassen (706) der topologieoptimierten Geometrie (220) an die Originalgeometrie (210) an Abschnitten der topologieoptimierten Geometrie (220), die den festen Bereichen der Originalgeometrie (210) entsprechen; und
Glätten (708) der topologieoptimierten Geometrie (220) an Abschnitten, die nicht festen Bereichen der Originalgeometrie (210) entsprechen.

2. Verfahren nach Anspruch 1, wobei das Anpassen der topologieoptimierten Geometrie (220) an die Originalgeometrie (210) Folgendes umfasst:
Ersetzen der Abschnitte der topologieoptimierten Geometrie (220), die den festen Bereichen der Originalgeometrie (210) entsprechen, durch die Originalgeometrie (210) an den festen Bereichen.

3. Verfahren nach Anspruch 2, umfassend Erzeugen der Endgeometrie (620) als konvergentes Modell (510),
wobei die festen Bereiche der Originalgeometrie (210) in der Endgeometrie (620) als computergestützte Entwurfs-(computer-aided design, CAD-) Geometrie dargestellt werden und die geglätteten Abschnitte der topologieoptimierten Geometrie (220) als Facetten dargestellt werden.

4. Verfahren nach Anspruch 1, wobei das Glätten der topologieoptimierten Geometrie (220) Folgendes umfasst:

Darstellen der topologieoptimierten Geometrie (220) mit einer feineren Granularität als eine für die Topologieoptimierung verwendete Diskretisierungsgranularität; und
Glätten der topologieoptimierten Geometrie (220) mit der feineren Granularität.

5. Verfahren nach Anspruch 1, wobei die Originalgeometrie (210) Folgendes umfasst:

eine Gesamtgeometrie (230), die Grenzen des Entwurfsraums setzt, auf den der Topologie-Optimierungsprozess Anwendung findet; und
eine feste Geometrie (240), die einen Abschnitt des Entwurfsraums umfasst, der ausgestaltet ist, um sich nicht zu ändern; und

wobei Anpassen der topologieoptimierten Geometrie (220) an die Originalgeometrie (210) an Abschnitten der topologieoptimierten Geometrie (220), die den festen Bereichen der Originalgeometrie (210) entsprechen, Folgendes umfasst:

Darstellen der Gesamtgeometrie (230), der festen Geometrie (240) und der topologieoptimierten Geometrie (220) mit einer feineren Granularität als eine für die Topologieoptimierung verwendete Diskretisierungsgranularität;
Anreichern der topologieoptimierten Geometrie (220) mit der feineren Granularität, um Abschnitte der festen Geometrie (240) zu beinhalten, die in der topologieoptimierten Geometrie (220) aufgrund von Entfernung durch den Topologie-Optimierungsprozess fehlen; und
Einschränken der topologieoptimierten Geometrie (220) mit der feineren Granularität, um Abschnitte der topologieoptimierten Geometrie (220) auszuschließen, die sich über die Gesamtgeometrie (230) hinaus erstrecken.

6. Verfahren nach Anspruch 1, wobei die Endgeometrie (620) eine ebenengesetzte Geometriedarstellung umfasst und ferner umfassend:

Extrahieren einer Netzdarstellung der Endgeometrie (620) aus der ebenengesetzten Geometriedarstellung;
Durchführen einer Booleschen-Operation zwischen der Netzdarstellung der Endgeometrie (620) und der Originalgeometrie (210), um eine Verzerrung der Endgeometrie zu entfernen, die sich über die Originalgeometrie (210) hinaus erstreckt.

7. Verfahren nach Anspruch 6, ferner umfassend Glätten der Netzdarstellung der Endgeometrie (620) zusätzlich zum Glätten der topologieoptimierten Geometrie (220).

8. Verfahren nach Anspruch 1, ferner umfassend Umwandeln (802) der Endgeometrie in eine computergestützte Entwurfs- (CAD-)editierbare Topologie durch:

Extrahieren (804) eines Dreiecksnetzes aus der Endgeometrie; und
Umwandeln (806) des Dreiecksnetzes in Unterteilungsflächen.

9. Verfahren nach Anspruch 8, wobei das Umwandeln des Dreiecksnetzes in die Unterteilungsflächen Folgendes umfasst:

Dezimieren des Dreiecksnetzes unter Verwendung von Kantenzusammenbruchoperationen;
Umwandeln des dezimierten Dreiecksnetzes in ein Vierecknetz; und
Initialisieren eines Steuerkäfigs aus dem Vierecknetz.

10. Verfahren nach Anspruch 8, wobei das Umwandeln des Dreiecksnetzes in die Unterteilungsflächen Folgendes umfasst:

Umwandeln des Dreiecksnetzes in ein Vierecknetz;
Vergröbern des Vierecknetzes; und
Initialisieren eines Steuerkäfigs aus dem vergröberten Vierecknetz.

11. Verfahren nach Anspruch 8, ferner umfassend Einrichten von Parametern des Steuerkäfigs durch das Durchführen einer Oberflächenanpassung, um eine Dreiecksfläche der Unterteilungsflächen anzupassen, Einstellen von Gewichten von Käfigkanten, um Falten in dem Steuerkäfig zu erstellen, oder eine Kombination aus beidem.

12. System (100) zum Verbessern einer Herstellung von topologieoptimierten 3D-Teilen, wobei das System (100) Folgendes umfasst:

einen Geometriezugriffsmotor (108), der dazu konfiguriert ist, auf Geometrien zuzugreifen, die einem Topologie-Optimierungsprozess zugeordnet sind, wobei die Geometrien Folgendes umfassen:

eine Originalgeometrie (210), die einen Entwurfsraum darstellt, auf den der Topologie-Optimierungsprozess Anwendung findet, wobei die Originalgeometrie (210) zudem das 3D-Teil darstellt und wobei die Originalgeometrie (210) feste Bereiche umfasst, die ausgestaltet sind, um durch den Topologie-Optimierungsprozess unverändert zu bleiben; und
eine topologieoptimierte Geometrie (220), die eine Ausgabe des Topologie-Optimierungsprozesses darstellt, der für die Originalgeometrie (210) durchgeführt wird; und

einen Geometrieverarbeitungsmotor (110), der dazu konfiguriert ist, eine Endgeometrie aus der topologieoptimierten Geometrie (220) zu erzeugen, durch:

Anpassen der topologieoptimierten Geometrie (220) an die Originalgeometrie (210) an Abschnitten der topologieoptimierten Geometrie (220), die den festen Bereichen der Originalgeometrie (210) entsprechen; und
Glätten der topologieoptimierten Geometrie (220) an Abschnitten, die nicht festen Bereichen der Originalgeometrie (210) entsprechen.

13. System nach Anspruch 12, wobei der Geometriezugriffsmotor (108), der Geometrieverarbeitungsmotor (110) oder eine Kombination aus beiden ferner dazu konfiguriert sind, ein Verfahren nach einem der Ansprüche 2-7 durchzuführen.

14. System nach Anspruch 12, ferner umfassend einen Geometriekonvertierungsmotor (112), der dazu konfiguriert ist, ein Verfahren nach einem der Ansprüche 8-11 durchzuführen.

15. Nichttransitoriches maschinenlesbares Medium (920), umfassend Anweisungen (922, 924, 926), die, wenn sie durch einen Prozessor (910) ausgeführt werden, ein Rechensystem (900) veranlassen, ein Verfahren nach einem der Ansprüche 1-11 durchzuführen.

## Revendications

1. Procédé d'amélioration d'une fabrication de pièces 3D à topologie optimisée, le procédé comprenant :
par un système informatique (100, 900), les étapes consistant à :
accéder (702) à des géométries associées à un processus d'optimisation topologique, les géométries comprenant :

une géométrie d'origine (210) qui représente un espace de conception sur lequel s'applique le processus d'optimisation topologique, dans lequel la géométrie d'origine (210) représente également la pièce 3D, et dans lequel la géométrie d'origine (210) comprend des régions fixes désignées pour demeurer inchangées par le processus d'optimisation topologique ; et
une géométrie à topologie optimisée (220) qui représente une sortie du processus d'optimisation topologique exécuté pour la géométrie d'origine (210) ; et
à générer (704) une géométrie finale (620) à partir de la géométrie à topologie optimisée (220) en :
conformant (706) la géométrie à topologie

optimisée (220) à la géométrie d'origine (210) à des portions de la géométrie à topologie optimisée (220) qui correspondent auxdites régions fixes de la géométrie d'origine (210) ; et
en lissant (708) la géométrie à topologie optimisée (220) à des portions qui correspondent à des régions non fixes de la géométrie d'origine (210).

2. Procédé selon la revendication 1, dans lequel l'étape de conformation de la géométrie à topologie optimisée (220) à la géométrie d'origine (210) comprend le fait de :
remplacer les portions de la géométrie à topologie optimisée (220) qui correspondent à des régions fixes de la géométrie d'origine (210) à la géométrie d'origine (210) au niveau de régions fixes.

3. Procédé selon la revendication 2, comprenant l'étape de génération de la géométrie finale (620) comme un modèle convergent (510),

dans lequel les régions fixes de la géométrie d'origine (210) dans la géométrie finale (620) sont représentées comme géométrie de conception assistée par ordinateur (CAD) et les portions lissées de la géométrie à topologie optimisée (220) sont représentées comme des facettes.

4. Procédé selon la revendication 1, dans lequel le lissage de la géométrie à topologie optimisée (220) comprend les étapes consistant à :

représenter la géométrie à topologie optimisée (220) à une granularité plus fine qu'une granularité de discrétisation utilisée pour l'optimisation topologique ; et
à lisser la géométrie à topologie optimisée (220) à la granularité plus fine.

5. Procédé selon la revendication 1, dans lequel la géométrie d'origine (210) comprend :

une géométrie globale (230) qui définit des limites de frontière de l'espace de conception auquel s'applique le processus d'optimisation topologique ; et
une géométrie fixe (240) qui comprend une portion de l'espace de conception qui est désignée pour ne pas changer ; et
dans lequel la conformation de la géométrie à topologie optimisée (220) à la géométrie d'origine (210) à des portions de la géométrie à topologie optimisée (220) qui correspondent à des régions fixes de la géométrie d'origine (210) comprend les étapes consistant à :

représenter la géométrie globale (230), la géométrie fixe (240), et la géométrie à topologie optimisée (220) à une granularité plus fine qu'une granularité de discrétisation utilisée pour l'optimisation topologique ;
enrichir, à la granularité plus fine, la géométrie à topologie optimisée (220) pour inclure des portions de la géométrie fixe (240) qui manquent dans la géométrie à topologie optimisée (220) dû à l'élimination par le processus d'optimisation topologique ; et
à restreindre, à la granularité plus fine, la géométrie à topologie optimisée (220) pour exclure des portions de la géométrie à topologie optimisée (220) qui s'étendent au-delà de la géométrie globale (230).

6. Procédé selon la revendication 1, dans lequel la géométrie finale (620) comprend une représentation géométrique par la méthode des courbes de niveau, et comprenant en outre :

l'extraction d'une représentation discrétisée de la géométrie finale (620) à partir de la représentation géométrique par la méthode des courbes de niveau ;
l'exécution d'une opération booléenne entre la représentation discrétisée de la géométrie finale (620) et la géométrie d'origine (210) pour retirer une distorsion à la géométrie finale qui s'étend au-delà de la géométrie d'origine (210).

7. Procédé selon la revendication 6, comprenant en outre, en plus du lissage de la géométrie à topologie optimisée (220), le lissage de la représentation discrétisée de la géométrie finale (620).

8. Procédé selon la revendication 1, comprenant en outre la conversion (802) de la géométrie finale en une topologie pouvant être éditée par conception assistée par ordinateur (CAD) par les étapes consistant à :

extraire (804) un maillage triangulaire de la géométrie finale ; et
convertir (806) le maillage triangulaire en surfaces de subdivision.

9. Procédé selon la revendication 8, dans lequel la conversion du maillage triangulaire en surfaces de subdivision comprend les étapes consistant à :

décimer le maillage triangulaire en utilisant des opérations d'élimination d'arêtes ;
convertir le maillage triangulaire décimé en un maillage quadrilatère ; et
initialiser une cage de contrôle à partir du maillage quadrilatère.

10. Procédé selon la revendication 8, dans lequel la conversion du maillage triangulaire en les surfaces de subdivision comprend les étapes consistant à :

convertir le maillage triangulaire en un maillage quadrilatère ;
déraffiner le maillage quadrilatère ; et
initialiser une cage de contrôle à partir du maillage quadrilatère déraffiné.

11. Procédé selon la revendication 8, comprenant en outre l'adaptation de paramètres de la cage de contrôle en exécutant un ajustement de surface pour ajuster une surface triangulaire des surfaces de subdivision, ajuster des poids des bords de cage pour créer des creux dans la cage de contrôle, ou une combinaison des deux.

12. Système (100) d'amélioration d'une fabrication de pièces 3D à topologie optimisée, ledit système (100) comprenant :

un moteur d'accès aux géométries (108) configuré pour accéder aux géométries associées à un processus d'optimisation topologique, les géométries comprenant :

une géométrie d'origine (210) qui représente un espace de conception auquel s'applique le processus d'optimisation topologique, dans lequel la géométrie d'origine (210) représente également la pièce 3D, et dans lequel la géométrie d'origine (210) comprend des régions fixes désignées pour demeurer inchangées par le processus d'optimisation topologique ; et une géométrie à topologie optimisée (220) qui représente une sortie du processus d'optimisation topologique exécuté pour la géométrie d'origine (210) ; et

un moteur de traitement géométrique (110) configuré pour générer une géométrie finale à partir de la géométrie à topologie optimisée (220) en :

conformant la géométrie à topologie optimisée (220) à la géométrie d'origine (210) à des portions de la géométrie à topologie optimisée (220) qui correspondent auxdites régions fixes de la géométrie d'origine (210) ; et en lissant la géométrie à topologie optimisée (220) à des portions qui correspondent à des régions non fixes de la géométrie d'origine (210).

13. Système selon la revendication 12, dans lequel le moteur d'accès aux géométries (108), le moteur de traitement géométrique (110), ou une combinaison des deux, sont en outre configurés pour exécuter un procédé selon l'une quelconque des revendications 2 à 7.

14. Système selon la revendication 12, comprenant en outre un moteur de conversion de géométrie (112) configuré pour exécuter un procédé selon l'une quelconque des revendications 8 à 11.

15. Support non transitoire lisible par machine (920) comprenant des instructions (922, 924, 926) qui, lorsqu'exécutées par un processeur (910), amènent un système informatique (900) à exécuter un procédé selon l'une quelconque des revendications 1 à 11.

EP 4 022 486 B1

Computing System 100

| Geometry Access Engine | 108 |
| Geometry Processing Engine | 110 |
| Geometry Conversion Engine | 112 |

Figure 1

Original Geometry 210

Topology Optimized Geometry 220

Geometry Access Engine                                                  108

Geometry Processing Engine                                             110

Overall Geometry 230

Topology Optimized Geometry 250

Fixed Geometry 240

Figure 2

EP 4 022 486 B1

Figure 3

Figure 4

Original Geometry 210

Geometry Processing Engine                                                    110

Replace with boundary geometry of
fixed regions of Original Geometry

Replace with boundary geometry of
fixed regions Original Geometry

Convergent Model 510
(Conformed Geometry)

Figure 5

EP 4 022 486 B1

| Geometry Processing Engine | 110 |

Smooth Non-Fixed portions of TO geometry

Unsmoothed Geometry 610

Final Geometry 620

Figure 6

700

Access geometries associated with a topology optimization process    702

↓

Generate a final geometry from a topology optimized geometry    704

Conform the topology optimized geometry to the original geometry at portions of the topology optimized geometry that correspond to fixed regions of the original geometry    706

↓

Smooth the topology optimized geometry at portions that correspond to non-fixed regions of the original geometry    708

Figure 7

EP 4 022 486 B1

800

| Convert a topology optimized geometry into a CAD-editable toplogy | 802 |

| Extract a triangle mesh from the topology optimized geometry | 804 |

| Convert the triangle mesh into subdivision surfaces | 806 |

Figure 8

Figure 9

EP 4 022 486 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. C. CUILLIÈRE et al.** Towards the Integration of Topology Optimization into the CAD Process. *COMPUTER-AIDED DESIGN AND APPLICATIONS*, 04 March 2013, vol. 11 (2)